# EUROPÄISCHE PATENTANMELDUNG

(11) **EP 3 232 015 A1**
(43) Veröffentlichungstag der Anmeldung: **18.10.2017**
(21) Anmeldenummer: 16164886.0
(22) Anmeldetag: 12.04.2016
(51) Int. Cl.: F01D 13/00, F01D 19/00, F02C 6/02, F02C 7/26

(54) **STRÖMUNGSMASCHINENSTRANG UND VERFAHREN ZUM KUPPELN DES STRÖMUNGSMASCHINENSTRANGS**

(71) Anmelder: Siemens Aktiengesellschaft, 80333 München (DE)
(72) Erfinder: Veltmann, David, 45128 Essen (DE); Bennauer, Martin, 46242 Bottrop (DE); Schindler, Christoph, 45219 Essen (DE)

(57) **Zusammenfassung**

Ein Strömungsmaschinenstrang (9) mit zwei Teilwellen, die jeweils ein fest angebrachtes Nutrad (5) aufweisen, einer ersten Überholkupplung (7), zwei Drehzahlmessern und einer Steuereinrichtung. Die Kupplung ist dafür ausgelegt die erste mit der zweiten Teilwelle zu kuppeln bzw. zu entkuppeln. Der erste Drehzahlmesser (11) misst die Drehzahl des ersten Nutrads. Der zweite Drehzahlmesser (12) misst die Drehzahl des zweiten Nutrads. Die Steuereinrichtung (14) bestimmt den Differenzwinkel zwischen der ersten sowie der zweiten Teilwelle und beschleunigt, bei einer Drehzahl der zweiten Teilwelle niedriger als eine Nenndrehzahl des Strömungsmaschinenstrangs und bei einer Drehzahl der ersten Teilwelle niedriger als die Drehzahl der zweiten Teilwelle mit einem anhand der gemessenen Drehzahlen und des Differenzwinkels bestimmten Beschleunigungswert, die Strömungsmaschinen derart, dass die beiden Teilwellen bei einem vorherbestimmten Zielkuppelwinkel miteinander kuppeln.

## Beschreibung

Ein Strömungsmaschinenstrang mit Strömungsmaschinen, wie beispielsweise in einem Kraftwerk, kann beim Rotieren des Strömungsmaschinenstrangs zu Schwingungen angeregt werden. Die Schwingungen des Strömungsmaschinenstrangs sind jedoch nachteilig, weil sie seine Lebensdauer verkürzen.

Der Strömungsmaschinenstrang kann mit Hilfe einer Kupplung in Teilwellen unterteilt werden, wobei die Teilwellen im entkuppelten Zustand unabhängig voneinander rotieren können und im gekuppelten Zustand zusammen rotieren. Beispielsweise kann eine Teilwelle eine Gasturbine aufweisen mit deren Abwärme eine Dampfturbine der anderen Teilwelle angetrieben wird. Beim Anfahren der Gasturbine steht noch nicht genug Abwärme zur Verfügung, um die Dampfturbine anzutreiben. Um Ventilation innerhalb der Dampfturbine zu unterbinden, werden herkömmlich die beiden Teilwellen erst miteinander gekuppelt, wenn die Teilwelle mit der Dampfturbine auf die Drehzahl der Teilwelle mit der Gasturbine beschleunigt wurde. Ebenfalls können beispielsweise in einem Dampf-/Wärmekraftwerk zwei Teilwellen mit jeweils einer Dampfturbine mittels einer Kupplung gekuppelt und entkuppelt werden. Bei einer Entnahme einer großen Menge an Dampf für eine Wärmeabgabe des Dampf-/Wärmekraftwerks können die Teilwellen entkuppelt werden, so dass eine der beiden Dampfturbinen nicht von Dampf durchströmt werden braucht.

Es hat sich herausgestellt, dass das Schwingungsverhalten des Strömungsmaschinenstrangs von dem Kuppelwinkel der beiden Teilwellen abhängt. Der Strömungsmaschinenstrang schwingt umso geringer, je genauer ein Zielkuppelwinkel mit einem guten Schwingungsverhalten angefahren werden kann.

Aufgabe der Erfindung ist es daher, ein Verfahren zum Kuppeln von zwei Teilwellen zu schaffen, bei denen ein gewünschter Zielkuppelwinkel der beiden Teilwellen zuverlässig und mit einer hohen Genauigkeit erreichbar ist.

Der erfindungsgemäße Strömungsmaschinenstrang weist eine erste Teilwelle, die eine erste Strömungsmaschine und ein an der ersten Teilwelle fest angebrachtes erstes Nutrad aufweist, eine zweite Teilwelle, die eine zweite Strömungsmaschine und ein an der zweiten Teilwelle fest angebrachtes zweites Nutrad aufweist, eine erste Überholkupplung, die eingerichtet ist die erste Teilwelle mit der zweiten Teilwelle zu kuppeln, wenn die Drehzahl der ersten Teilwelle gleich der Drehzahl der zweiten Teilwelle ist, und die erste Teilwelle von der zweiten Teilwelle zu entkuppeln, wenn die Drehzahl der ersten Teilwelle niedriger als die Drehzahl der zweiten Teilwelle ist, einen ersten Drehzahlmesser, der eingerichtet ist die Drehzahl des ersten Nutrads zu messen, einen zweiten Drehzahlmesser, der eingerichtet ist die Drehzahl des zweiten Nutrads zu messen, und eine Steuereinrichtung auf, die eingerichtet ist, den Differenzwinkel zwischen der ersten Teilwelle und der zweiten Teilwelle zu bestimmen und bei einer Drehzahl der zweiten Teilwelle niedriger als eine Nenndrehzahl des Strömungsmaschinenstrangs und bei einer Drehzahl der ersten Teilwelle niedriger als die Drehzahl der zweiten Teilwelle mit einem anhand der gemessenen Drehzahlen und des Differenzwinkels bestimmten Beschleunigungswert die erste Strömungsmaschine und/oder die zweite Strömungsmaschine derart zu beschleunigen, dass die beiden Teilwellen bei einem vorherbestimmten Zielkuppelwinkel miteinander kuppeln.

Das erfindungsgemäße Verfahren zum Kuppeln eines Strömungsmaschinenstrangs mit einer ersten Teilwelle, die eine erste Strömungsmaschine und ein an der ersten Teilwelle fest angebrachtes erstes Nutrad aufweist, einer zweiten Teilwelle, die eine zweite Strömungsmaschine und ein an der zweiten Teilwelle fest angebrachtes zweites Nutrad aufweist, und einer ersten Überholkupplung, die eingerichtet ist die erste Teilwelle mit der zweiten Teilwelle zu kuppeln, wenn die Drehzahl der ersten Teilwelle gleich der Drehzahl der zweiten Teilwelle ist, und die erste Teilwelle von der zweiten Teilwelle zu entkuppeln, wenn die Drehzahl der ersten Teilwelle niedriger als die Drehzahl der zweiten Teilwelle ist, weist die Schritte auf: a) Rotieren der zweiten Teilwelle mit einer Drehzahl niedriger als eine Nenndrehzahl des Strömungsmaschinenstrangs und Rotieren der ersten Teilwelle mit einer Drehzahl niedriger als die Drehzahl der zweiten Teilwelle; b) Messen der Drehzahlen des ersten Nutrads und des zweiten Nutrads; c) Messen des Differenzwinkels zwischen der ersten Teilwelle und der zweiten Teilwelle; d) Beschleunigen der ersten Strömungsmaschine und/oder der zweiten Strömungsmaschine mit einem anhand der gemessenen Drehzahlen und des Differenzwinkels bestimmten Beschleunigungswert derart, dass die beiden Teilwellen bei einem vorherbestimmten Zielkuppelwinkel miteinander kuppeln.

Weil die Nuträder fest mit der jeweiligen Teilwelle verbunden sind, ist die gemessene Drehzahl der Nuträder identisch mit der Drehzahl der mit dem jeweiligen Nutrad fest verbundenen Teilwelle. Anhand der gemessenen Drehzahlen der beiden Nuträder und des Differenzwinkels kann dann der Beschleunigungswert berechnet werden anhand dessen die beiden Teilwellen bei dem vorherbestimmten Zielkuppelwinkel miteinander kuppeln. Durch das Messen der Drehzahlen der Nuträder ist aufgrund der hohen Anzahl an Nuten in den Nuträdern die Drehzahl der Teilwellen mit einer hohen Genauigkeit bestimmbar. Dies gilt insbesondere bei den niedrigen Drehzahlen, die niedriger als die Nenndrehzahl des Strömungsmaschinenstrangs sind. Durch diese hohe Genauigkeit der Drehzahlen kann auch der Beschleunigungswert mit einer hohen Genauigkeit ermittelt werden, wodurch der Zielkuppelwinkel der beiden Teilwellen zuverlässig und mit einer hohen Genauigkeit erreichbar ist.

Der Beschleunigungswert kann sowohl positiv als auch negativ sein, womit ein schnelleres Drehen und ein langsameres Drehen der jeweiligen Teilwelle gemeint sein kann. Dabei kann zum Kuppeln der beiden Teilwellen die erste Teilwelle schneller gedreht und/oder die zweite Teilwelle langsamer gedreht werden. In dem Fall, dass beide sowohl die erste Teilwelle schneller und die zweite Teilwelle langsamer gedreht wird, sind zwei Beschleunigungswerte, ein Wert für jede Teilwelle, zu berechnen.

Es ist bevorzugt, dass der Strömungsmaschinenstrang eine dritte Teilwelle, die eine dritte Strömungsmaschine und ein an der dritten Teilwelle fest angebrachtes drittes Nutrad aufweist, eine zweite Überholkupplung, die eingerichtet ist die zweite Teilwelle mit der dritten Teilwelle zu kuppeln, wenn die Drehzahl der zweiten Teilwelle gleich der Drehzahl der dritten Teilwelle ist, und die zweite Teilwelle von der dritten Teilwelle zu entkuppeln, wenn die Drehzahl der zweiten Teilwelle niedriger als die Drehzahl der dritten Teilwelle ist, und einen dritten Drehzahlmesser aufweist, der eingerichtet ist die Drehzahl des dritten Nutrads zu messen, wobei die Steuereinrichtung eingerichtet ist den Differenzwinkel zwischen der zweiten Teilwelle und der dritten Teilwelle zu bestimmen und bei einer Drehzahl der dritten Teilwelle niedriger als die Nenndrehzahl des Strömungsmaschinenstrangs und bei einer Drehzahl des zweiten Teilstrangs niedriger als die Drehzahl des dritten Teilstrangs mit einem anhand der gemessenen Drehzahlen des zweiten Nutrads und des dritten Nutrads sowie des Differenzwinkels zwischen der zweiten Teilwelle und der dritten Teilwelle bestimmten zweiten Beschleunigungswert die zweite Strömungsmaschine und/oder die dritte Strömungsmaschine derart zu beschleunigen, dass die zweite Teilwelle mit der dritten Teilwelle bei einem vorherbestimmten zweiten Zielkuppelwinkel kuppelt.

Das für das Kuppeln der ersten und zweiten Teilwelle Ausgeführte gilt analog für das Kuppeln der zweiten und dritten Teilwelle.

Die Steuereinrichtung ist bevorzugt eingerichtet bei einer Drehzahl der zweiten Teilwelle niedriger als ein Fünftel der Nenndrehzahl des Strömungsmaschinenstrangs die erste Teilwelle mit der zweiten Teilwelle und/oder bei einer Drehzahl der dritten Teilwelle niedriger als ein Fünftel der Nenndrehzahl des Strömungsmaschinenstrangs die zweite Teilwelle mit der dritten Teilwelle bei dem jeweiligen Zielkuppelwinkel zu kuppeln. Auch bei derart niedrigen Drehzahlen sind die Drehzahlen mit der hohen Genauigkeit messbar, wodurch der jeweilige Zielkuppelwinkel mit der hohen Genauigkeit erreichbar ist.

Die Nuträder weisen bevorzugt eine Mehrzahl an Nuten auf, die von Flanken begrenzt sind und die Drehzahlmesser sind eingerichtet zum Messen der jeweiligen Drehzahl die Flanken zu erfassen. Durch das Erfassen der Flanken sind die Drehzahlen der Nuträder vorteilhaft mit einer besonders hohen Genauigkeit messbar.

Es ist bevorzugt, dass die Nuträder eine Mehrzahl an Nuten aufweisen, die ungleichmäßig verteilt entlang des Umfangs des Strömungsmaschinenstrangs angeordnet sind, und die Steuereinrichtung eingerichtet ist anhand der ungleichmäßig verteilten Nuten den Differenzwinkel zwischen zwei benachbarten Teilwellen zu bestimmen. Dadurch ist der Differenzwinkel besonders einfach bestimmbar. Insbesondere ist es nicht erforderlich eine weitere Markierung an jeder Teilwelle vorzusehen, anhand derer der Differenzwinkel zu bestimmen ist.

Es ist bevorzugt, dass die Steuereinrichtung eingerichtet ist, beim Beschleunigen der jeweiligen Strömungsmaschine einen neuen Differenzwinkel zu bestimmen und die jeweilige Strömungsmaschine mit einem anhand neuer gemessener Drehzahlen und des neuen Differenzwinkels bestimmten neuen Beschleunigungswert derart zu beschleunigen, dass der jeweilige Zielkuppelwinkel erreicht wird. Dadurch kann die Genauigkeit, mit der der Zielkuppelwinkel erreichbar ist, weiter gesteigert werden. Dabei kann der neue Beschleunigungswert auch mehrfach oder sogar kontinuierlich bestimmt werden.

Der Strömungsmaschinenstrang weist bevorzugt eine dritte Teilwelle, die eine dritte Strömungsmaschine und ein fest an der dritten Teilwelle angebrachtes drittes Nutrad aufweist, und eine zweite Überholkupplung auf, die eingerichtet ist die zweite Teilwelle mit der dritten Teilwelle zu kuppeln, wenn die Drehzahl der zweiten Teilwelle gleich der Drehzahl der dritten Teilwelle ist, und die zweite Teilwelle von der dritten Teilwelle zu entkuppeln, wenn die Drehzahl der zweiten Teilwelle niedriger als die Drehzahl der dritten Teilwelle ist, und das Verfahren weist bevorzugt die Schritte auf: a1) Rotieren der dritten Teilwelle mit einer Drehzahl niedriger als eine Nenndrehzahl des Strömungsmaschinenstrangs und Rotieren der zweiten Teilwelle mit einer Drehzahl niedriger als die Drehzahl der dritten Teilwelle; b1) Messen der Drehzahl des dritten Nutrads; c1) Messen des Differenzwinkels zwischen der zweiten Teilwelle und der dritten Teilwelle; d1) Beschleunigen der zweiten Strömungsmaschine und/oder der dritten Strömungsmaschine mit einem anhand der gemessenen Drehzahlen des zweiten Nutrads und des dritten Nutrads und des Differenzwinkels zwischen der zweiten Teilwelle und der dritten Teilwelle bestimmten Beschleunigungswert derart, dass die beiden Teilwellen bei einem vorherbestimmten zweiten Zielkuppelwinkel miteinander kuppeln.

Es wird in Schritt a) bevorzugt die zweite Teilwelle und/oder in Schritt a1) die dritte Teilwelle mit einer Drehzahl niedriger als ein Fünftel der Nenndrehzahl des Strömungsmaschinenstrangs rotiert.

Es ist bevorzugt, dass die Nuträder eine Mehrzahl an Nuten aufweist, die von Flanken begrenzt sind, und zum Messen der jeweiligen Drehzahl die Flanken erfasst werden. Die Nuträder weisen bevorzugt eine Mehrzahl an Nuten auf, die ungleichmäßig verteilt entlang des Umfangs des Strömungsmaschinenstrangs angeordnet sind, und der Differenzwinkel zwischen zwei benachbarten Teilwellen anhand der ungleichmäßig verteilten Nuten bestimmt wird.

Es ist bevorzugt, dass das Verfahren beim Anfahren des Strömungsmaschinenstrangs und/oder, in dem Fall, dass mindestens eine der Teilwellen vom Rest des Gasturbinenstrangs entkuppelt ist, beim Abfahren des Gasturbinenstrangs durchgeführt wird. Es ist bevorzugt, dass in Schritt d) und/oder d1) beim Beschleunigen der jeweiligen Strömungsmaschine ein neuer Differenzwinkel bestimmt wird und die jeweilige Strömungsmaschine mit einem anhand neuer gemessener Drehzahlen und des neuen Differenzwinkels bestimmten neuen Beschleunigungswert derart beschleunigt wird, dass der jeweilige Zielkuppelwinkel erreicht wird. Dabei kann der Schritt d) vor dem Schritt d1) oder der Schritt d1) vor dem Schritt d) durchgeführt werden.

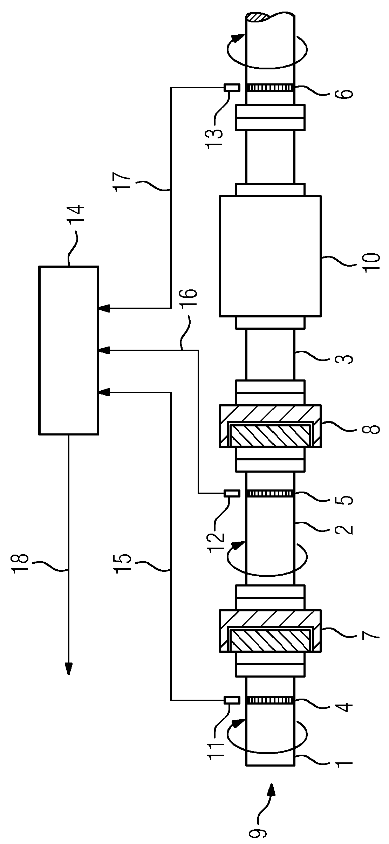

Im Folgenden wird anhand der beigefügten schematischen Zeichnung die Erfindung näher erläutert. Die Figur zeigt einen erfindungsgemäßen Strömungsmaschinenstrang.

Wie es aus der Figur ersichtlich ist, weist ein Strömungsmaschinenstrang 9 eine erste Teilwelle 1 und eine zweite Teilwelle 2 auf. Die erste Teilwelle 1 weist eine erste Strömungsmaschine (nicht dargestellt) und ein an der ersten Teilwelle 1 fest angebrachtes erstes Nutrad 4 auf. Die zweite Teilwelle 2 weist eine zweite Strömungsmaschine (nicht dargestellt) und ein an der zweiten Teilwelle 2 fest angebrachtes zweites Nutrad 5 auf. Beispielsweise können die erste und zweite Strömungsmaschine jeweils eine Dampfturbine sein. Der Strömungsmaschinenstrang 9 weist eine erste Überholkupplung 7 auf, die zwischen der ersten Teilwelle 1 und der zweiten Teilwelle 2 angeordnet ist und eingerichtet ist die erste Teilwelle 1 mit der zweiten Teilwelle 2 zu kuppeln, wenn die Drehzahl der ersten Teilwelle 1 gleich der Drehzahl der zweiten Teilwelle 2 ist, und die erste Teilwelle 1 von der zweiten Teilwelle 2 zu entkuppeln, wenn die Drehzahl der ersten Teilwelle 1 niedriger als die Drehzahl der zweiten Teilwelle 2 ist.

Der Strömungsmaschinenstrang 9 weist einen ersten Drehzahlmesser 11 auf, der eingerichtet ist die Drehzahl des ersten Nutrads 4 zu messen und, weil das erste Nutrad 4 fest an der ersten Teilwelle 1 angebracht ist, damit auch die Drehzahl der ersten Teilwelle 1 zu messen. Der Strömungsmaschinenstrang 9 weist einen zweiten Drehzahlmesser 12 auf, der eingerichtet ist die Drehzahl des zweiten Nutrads 5 zu messen und, weil das zweite Nutrad 5 fest an der zweiten Teilwelle 2 angebracht ist, damit auch die Drehzahl der zweiten Teilwelle 2 zu messen.

Der Strömungsmaschinenstrang 9 weist eine Steuereinrichtung 14 auf, die eingerichtet ist den Differenzwinkel zwischen der ersten Teilwelle 1 und der zweiten Teilwelle 2 zu bestimmen und bei einer Drehzahl der zweiten Teilwelle 2 niedriger als eine Nenndrehzahl des Strömungsmaschinenstrangs 9 und bei einer Drehzahl der ersten Teilwelle 1 niedriger als die Drehzahl der zweiten Teilwelle 2 mit einem anhand der gemessenen Drehzahlen und des Differenzwinkels bestimmten Beschleunigungswert die erste Strömungsmaschine und/oder die zweite Strömungsmaschine derart zu beschleunigen, dass die beiden Teilwellen 1, 2 bei einem vorherbestimmten Zielkuppelwinkel miteinander kuppeln. Dazu weist der Strömungsmaschinenstrang 9 eine erste Signalleitung 15 zum Übertragen der vom ersten Drehzahlmesser 11 gemessenen Drehzahl an die Steuereinrichtung 14, eine zweite Signalleitung 16 zum Übertragen der vom zweiten Drehzahlmesser 12 gemessene Drehzahl an die Steuereinrichtung 14 und eine dritte Signalleitung 17 zum Übertragen der vom dritten Drehzahlmesser 13 gemessenen Drehzahl an die Steuereinrichtung 14 auf. Weiterhin weist der Strömungsmaschinenstrang 9 eine Steuerleitung 18 zum Steuern der Drehzahlen der jeweiligen Teilwellen 1 bis 3 auf. Beispielsweise können mit der Steuerleitung 18 Massenströme der Strömungsmaschinen gesteuert werden.

Der Zielkuppelwinkel wird dabei derart vorbestimmt, dass die Schwingungen im Betrieb der gekuppelten Teilwellen 1, 2 möglichst gering sind. Dazu können beispielsweise die Schwingungen für verschiedene Zielkuppelwinkel rechnerisch bestimmt werden, insbesondere mittels einer Finiten Elemente Methode, und dann der Zielkuppelwinkel ausgewählt werden, bei dem die geringste Spannungsbelastung des Strömungsmaschinenstrangs 9 auftritt. Ebenso ist denkbar, dass die Schwingungen bei verschiedenen Zielkuppelwinkeln experimentell bestimmt werden und aus den experimentellen Daten derjenige Zielkuppelwinkel ausgewählt wird, bei dem die geringste Spannungsbelastung auftritt.

Wie es aus der Figur ersichtlich ist, weist der Strömungsmaschinenstrang 9 eine dritte Teilwelle 3 auf. Die dritte Teilwelle 1 weist einen Generator 10, eine dritte Strömungsmaschine (nicht dargestellt) und ein an der dritten Teilwelle 3 fest angebrachtes drittes Nutrad 6 auf. Beispielsweise kann die dritte Strömungsmaschine eine Gasturbine sein. Der Strömungsmaschinenstrang 9 weist eine zweite Überholkupplung 8 auf, die zwischen der zweiten Teilwelle 2 und der dritten Teilwelle 3 angeordnet ist und eingerichtet ist die zweite Teilwelle 2 mit der dritten Teilwelle 3 zu kuppeln, wenn die Drehzahl der zweiten Teilwelle 2 gleich der Drehzahl der dritten Teilwelle 3 ist, und die zweite Teilwelle 2 von der dritten Teilwelle 3 zu entkuppeln, wenn die Drehzahl der zweiten Teilwelle 2 niedriger als die Drehzahl der dritten Teilwelle 3 ist. Der Strömungsmaschinenstrang 9 weist einen dritten Drehzahlmesser 13 auf, der eingerichtet ist die Drehzahl des dritten Nutrads 6 zu messen und, weil das dritte Nutrad 6 fest an der dritten Teilwelle 3 angebracht ist, damit auch die Drehzahl der dritten Teilwelle 3 zu messen. Die Steuereinrichtung 14 ist eingerichtet den Differenzwinkel zwischen der zweiten Teilwelle 2 und der dritten Teilwelle 3 zu bestimmen und bei einer Drehzahl der dritten Teilwelle 3 niedriger als eine Nenndrehzahl des Strömungsmaschinenstrangs 9 und bei einer Drehzahl des zweiten Teilstrangs 2 niedriger als die Drehzahl des dritten Teilstrangs 3 mit einem anhand der gemessenen Drehzahlen des zweiten Nutrads 5 und des dritten Nutrads 6 sowie des Differenzwinkels zwischen der zweiten Teilwelle 2 und der dritten Teilwelle 3 bestimmten zweiten Beschleunigungswert die zweite Strömungsmaschine und/oder die dritte Strömungsmaschine derart zu beschleunigen, dass die zweite Teilwelle 2 mit der dritten Teilwelle 3 bei einem vorherbestimmten zweiten Zielkuppelwinkel kuppelt. Der zweite Zielkuppelwinkel kann dabei analog zu dem Zielkuppelwinkel bestimmt werden.

Beispielsweise ist die Nenndrehzahl bei einem zweipoligen Generator die Netzfrequenz, beispielsweise 50 Hz oder 60 Hz. Dementsprechend ist die Nenndrehzahl bei einem vierpoligen Generator die halbe Netzfrequenz, beispielsweise 25 Hz oder 30 Hz.

Die Steuereinrichtung ist eingerichtet bei einer Drehzahl der zweiten Teilwelle 2 niedriger als ein Fünftel der Nenndrehzahl des Strömungsmaschinenstrangs 9 die erste Teilwelle 1 mit der zweiten Teilwelle 2 und/oder bei einer Drehzahl der dritten Teilwelle 3 niedriger als ein Fünftel der Nenndrehzahl des Strömungsmaschinenstrangs 9 die zweite Teilwelle 2 mit der dritten Teilwelle 3 bei dem jeweiligen Zielkuppelwinkel zu kuppeln. Die Nenndrehzahl kann beispielsweise von 45 bis 85 Hz betragen. Insbesondere wird bei einer Drehzahl von 1 Hz bis 5 Hz für die zweite Teilwelle 2 die erste Teilwelle 1 mit der zweiten Teilwelle 2 gekuppelt, wenn der Strömungsmaschinenstrang hochgefahren wird. Insbesondere wird bei einer Drehzahl von 1 Hz bis 10 Hz für die zweite Teilwelle 2 die erste Teilwelle 1 mit der zweiten Teilwelle 2 gekuppelt, wenn der Strömungsmaschinenstrang heruntergefahren wird. Insbesondere wird bei einer Drehzahl von 1 Hz bis 5 Hz für die dritte Teilwelle 3 die zweite Teilwelle 2 mit der dritten Teilwelle 3 gekuppelt, wenn der Strömungsmaschinenstrang hochgefahren wird. Insbesondere wird bei einer Drehzahl von 1 Hz bis 10 Hz für die dritte Teilwelle 3 die zweite Teilwelle 2 mit der dritten Teilwelle 3 gekuppelt, wenn der Strömungsmaschinenstrang heruntergefahren wird.

Die Nuträder 4 bis 6 weisen eine Mehrzahl an Nuten auf, die von Flanken begrenzt sind, und die Drehzahlmesser 11 bis 13 sind eingerichtet zum Messen der jeweiligen Drehzahl die Flanken zu erfassen. Die Flanken können sich im Wesentlichen in Radialrichtung erstrecken. Dadurch können die Flanken mit einem besonders hohen Signalgradienten erfasst werden, wodurch die Drehzahlen mit einer besonders hohen Genauigkeit messbar sind.

Die Nuträder 4 bis 6 weisen eine Mehrzahl an Nuten auf, die ungleichmäßig verteilt entlang des Umfangs des Strömungsmaschinenstrangs 9 angeordnet sind, und die Steuereinrichtung 14 ist eingerichtet anhand der ungleichmäßig verteilten Nuten den Differenzwinkel zwischen zwei benachbarten Teilwellen 1 bis 3 zu bestimmen. Beispielsweise kann zum ungleichmäßigen Verteilen mindestens eine Nut entfallen. Auch ist es möglich, mindestens eine Nut mit einer von den übrigen Nuten verschiedenen Breite in Umfangsrichtung des Strömungsmaschinenstrangs vorzusehen. Ebenfalls ist es möglich den Abstand mindestens eines Paars an benachbarten Nuten in Umfangsrichtung verschieden breit von den übrigen Paaren an benachbarten Nuten auszuführen. Es können beispielsweise für jedes der Nuträder 4 bis 6 von 45 bis 75 Nuten vorgesehen sein.

Die Steuereinrichtung ist eingerichtet, beim Beschleunigen der jeweiligen Strömungsmaschine einen neuen Differenzwinkel zu bestimmen und die jeweilige Strömungsmaschine mit einem anhand neuer gemessener Drehzahlen und des neuen Differenzwinkels bestimmten neuen Beschleunigungswert derart zu beschleunigen, dass der jeweilige Zielkuppelwinkel erreicht wird.

Beispielhaft ist ein Verfahren zum Kuppeln eines Strömungsmaschinenstrangs 9 mit einer ersten Teilwelle 1, die eine erste Strömungsmaschine und ein an der ersten Teilwelle 1 fest angebrachtes erstes Nutrad 4 aufweist, einer zweiten Teilwelle 2, die eine zweite Strömungsmaschine und ein an der zweiten Teilwelle 2 fest angebrachtes zweites Nutrad 5 aufweist, und einer ersten Überholkupplung 7, die eingerichtet ist die erste Teilwelle 1 mit der zweiten Teilwelle 2 zu kuppeln, wenn die Drehzahl der ersten Teilwelle 1 gleich der Drehzahl der zweiten Teilwelle 2 ist, und die erste Teilwelle 1 von der zweiten Teilwelle 2 zu entkuppeln, wenn die Drehzahl der ersten Teilwelle 1 niedriger als die Drehzahl der zweiten Teilwelle 2 ist, mit den Schritten durchzuführen: a) Rotieren der zweiten Teilwelle 2 mit einer Drehzahl niedriger als eine Nenndrehzahl, die insbesondere von 45 bis 85 Hz beträgt, des Strömungsmaschinenstrangs 9, insbesondere mit einer Drehzahl von 1 bis 10 Hz, und Rotieren der ersten Teilwelle 1 mit einer Drehzahl niedriger als die Drehzahl der zweiten Teilwelle 2; b) Messen der Drehzahlen des ersten Nutrads 4 und des zweiten Nutrads 5, wobei die Nuträder 4 bis 6 eine Mehrzahl an Nuten, insbesondere von 45 bis 75 Nuten, aufweisen, die von sich im Wesentlichen radial erstreckenden Flanken begrenzt sind und zum Messen der jeweiligen Drehzahl die Flanken erfasst werden; c) Messen des Differenzwinkels zwischen der ersten Teilwelle 1 und der zweiten Teilwelle 2, wobei die Nuten ungleichmäßig verteilt entlang des Umfangs des Strömungsmaschinenstrangs 9 angeordnet sind und der Differenzwinkel anhand der ungleichmäßig verteilten Nuten bestimmt wird; d) Beschleunigen der ersten Strömungsmaschine und/oder der zweiten Strömungsmaschine mit einem anhand der gemessenen Drehzahlen und des Differenzwinkels bestimmten Beschleunigungswert derart, dass die beiden Teilwellen 1, 2 bei einem vorherbestimmten Zielkuppelwinkel miteinander kuppeln, wobei beim Beschleunigen der Strömungsmaschine ein neuer Differenzwinkel bestimmt wird und die jeweilige Strömungsmaschine mit einem anhand neuer gemessener Drehzahlen und des neuen Differenzwinkels bestimmten neuen Beschleunigungswert derart beschleunigt wird, dass der Zielkuppelwinkel erreicht wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Strömungsmaschinenstrang mit einer ersten Teilwelle (1), die eine erste Strömungsmaschine und ein an der ersten Teilwelle (1) fest angebrachtes erstes Nutrad (4) aufweist, einer zweiten Teilwelle (2), die eine zweite Strömungsmaschine und ein an der zweiten Teilwelle (2) fest angebrachtes zweites Nutrad (5) aufweist, einer ersten Überholkupplung (7), die eingerichtet ist die erste Teilwelle (1) mit der zweiten Teilwelle (2) zu kuppeln, wenn die Drehzahl der ersten Teilwelle (1) gleich der Drehzahl der zweiten Teilwelle (2) ist, und die erste Teilwelle (1) von der zweiten Teilwelle (2) zu entkuppeln, wenn die Drehzahl der ersten Teilwelle (1) niedriger als die Drehzahl der zweiten Teilwelle (2) ist, einem ersten Drehzahlmesser (11), der eingerichtet ist die Drehzahl des ersten Nutrads (4) zu messen, einem zweiten Drehzahlmesser (12), der eingerichtet ist die Drehzahl des zweiten Nutrads (5) zu messen, und einer Steuereinrichtung (14), die eingerichtet ist, den Differenzwinkel zwischen der ersten Teilwelle (1) und der zweiten Teilwelle (2) zu bestimmen und bei einer Drehzahl der zweiten Teilwelle (2) niedriger als eine Nenndrehzahl des Strömungsmaschinenstrangs (9) und bei einer Drehzahl der ersten Teilwelle (1) niedriger als die Drehzahl der zweiten Teilwelle (2) mit einem anhand der gemessenen Drehzahlen und des Differenzwinkels bestimmten Beschleunigungswert die erste Strömungsmaschine und/oder die zweite Strömungsmaschine derart zu beschleunigen, dass die beiden Teilwellen (1, 2) bei einem vorherbestimmten Zielkuppelwinkel miteinander kuppeln.

2. Strömungsmaschinenstrang gemäß Anspruch 1,
wobei der Strömungsmaschinenstrang (9) eine dritte Teilwelle (3), die eine dritte Strömungsmaschine und ein an der dritten Teilwelle (3) fest angebrachtes drittes Nutrad (6) aufweist, eine zweite Überholkupplung (8), die eingerichtet ist die zweite Teilwelle (2) mit der dritten Teilwelle (2) zu kuppeln, wenn die Drehzahl der zweiten Teilwelle (2) gleich der Drehzahl der dritten Teilwelle (3) ist, und die zweite Teilwelle (2) von der dritten Teilwelle (3) zu entkuppeln, wenn die Drehzahl der zweiten Teilwelle (2) niedriger als die Drehzahl der dritten Teilwelle (3) ist, und einen dritten Drehzahlmesser (13) aufweist, der eingerichtet ist die Drehzahl des dritten Nutrads (6) zu messen, wobei die Steuereinrichtung (14) eingerichtet ist den Differenzwinkel zwischen der zweiten Teilwelle (2) und der dritten Teilwelle (3) zu bestimmen und bei einer Drehzahl der dritten Teilwelle (3) niedriger als die Nenndrehzahl des Strömungsmaschinenstrangs (9) und bei einer Drehzahl des zweiten Teilstrangs (2) niedriger als die Drehzahl des dritten Teilstrangs (3) mit einem anhand der gemessenen Drehzahlen des zweiten Nutrads (5) und des dritten Nutrads (6) sowie des Differenzwinkels zwischen der zweiten Teilwelle (2) und der dritten Teilwelle (3) bestimmten zweiten Beschleunigungswert die zweite Strömungsmaschine und/oder die dritte Strömungsmaschine derart zu beschleunigen, dass die zweite Teilwelle (2) mit der dritten Teilwelle (3) bei einem vorherbestimmten zweiten Zielkuppelwinkel kuppelt.

3. Strömungsmaschinenstrang gemäß Anspruch 1 oder 2, wobei die Steuereinrichtung (14) eingerichtet ist bei einer Drehzahl der zweiten Teilwelle (2) niedriger als ein Fünftel der Nenndrehzahl des Strömungsmaschinenstrangs (9) die erste Teilwelle (1) mit der zweiten Teilwelle (2) und/oder bei einer Drehzahl der dritten Teilwelle (3) niedriger als ein Fünftel der Nenndrehzahl des Strömungsmaschinenstrangs (9) die zweite Teilwelle (2) mit der dritten Teilwelle (3) bei dem jeweiligen Zielkuppelwinkel zu kuppeln.

4. Strömungsmaschinenstrang gemäß einem der Ansprüche 1 bis 3,
wobei die Nuträder (4 bis 6) eine Mehrzahl an Nuten aufweisen, die von Flanken begrenzt sind, und die Drehzahlmesser (11 bis 13) eingerichtet sind zum Messen der jeweiligen Drehzahl die Flanken zu erfassen.

5. Strömungsmaschinenstrang gemäß einem der Ansprüche 1 bis 4,
wobei die Nuträder (4 bis 6) eine Mehrzahl an Nuten aufweisen, die ungleichmäßig verteilt entlang des Umfangs des Strömungsmaschinenstrangs (9) angeordnet sind, und die Steuereinrichtung (14) eingerichtet ist anhand der ungleichmäßig verteilten Nuten den Differenzwinkel zwischen zwei benachbarten Teilwellen (1 bis 3) zu bestimmen.

6. Strömungsmaschinenstrang gemäß einem der Ansprüche 1 bis 5,
wobei die Steuereinrichtung (14) eingerichtet ist, beim Beschleunigen der jeweiligen Strömungsmaschine einen neuen Differenzwinkel zu bestimmen und die jeweilige Strömungsmaschine mit einem anhand neuer gemessener Drehzahlen und des neuen Differenzwinkels bestimmten neuen Beschleunigungswert derart zu beschleunigen, dass der jeweilige Zielkuppelwinkel erreicht wird.

7. Verfahren zum Kuppeln eines Strömungsmaschinenstrangs (9) mit einer ersten Teilwelle (1), die eine erste Strömungsmaschine und ein an der ersten Teilwelle (1) fest angebrachtes erstes Nutrad (4) aufweist, einer zweiten Teilwelle (2), die eine zweite Strömungsmaschine und ein an der zweiten Teilwelle (2) fest angebrachtes zweites Nutrad (5) aufweist, und einer ersten Überholkupplung (7), die eingerichtet ist die erste Teilwelle (1) mit der zweiten Teilwelle (2) zu kuppeln, wenn die Drehzahl der ersten Teilwelle (1) gleich der Drehzahl der zweiten Teilwelle (2) ist, und die erste Teilwelle (1) von der zweiten Teilwelle (2) zu entkuppeln, wenn die Drehzahl der ersten Teilwelle (1) niedriger als die Drehzahl der zweiten Teilwelle (2) ist, mit den Schritten:
a) Rotieren der zweiten Teilwelle (2) mit einer Drehzahl niedriger als eine Nenndrehzahl des Strömungsmaschinenstrangs (9) und Rotieren der ersten Teilwelle (1) mit einer Drehzahl niedriger als die Drehzahl der zweiten Teilwelle (2) ;
b) Messen der Drehzahlen des ersten Nutrads (4) und des zweiten Nutrads (5);
c) Messen des Differenzwinkels zwischen der ersten Teilwelle (1) und der zweiten Teilwelle (2);
d) Beschleunigen der ersten Strömungsmaschine und/oder der zweiten Strömungsmaschine mit einem anhand der gemessenen Drehzahlen und des Differenzwinkels bestimmten Beschleunigungswert derart, dass die beiden Teilwellen (1, 2) bei einem vorherbestimmten Zielkuppelwinkel miteinander kuppeln.

8. Verfahren gemäß Anspruch 7,
wobei der Strömungsmaschinenstrang (9) eine dritte Teilwelle (3), die eine dritte Strömungsmaschine und ein fest an der dritten Teilwelle (3) angebrachtes drittes Nutrad (4) aufweist, und eine zweite Überholkupplung (8) aufweist, die eingerichtet ist die zweite Teilwelle (2) mit der dritten Teilwelle (3) zu kuppeln, wenn die Drehzahl der zweiten Teilwelle (2) gleich der Drehzahl der dritten Teilwelle (2) ist, und die zweite Teilwelle (2) von der dritten Teilwelle (2) zu entkuppeln, wenn die Drehzahl der zweiten Teilwelle (2) niedriger als die Drehzahl der dritten Teilwelle (3) ist, mit den Schritten:
a1) Rotieren der dritten Teilwelle (3) mit einer Drehzahl niedriger als eine Nenndrehzahl des Strömungsmaschinenstrangs (9) und Rotieren der zweiten Teilwelle (2) mit einer Drehzahl niedriger als die Drehzahl der dritten Teilwelle (3);
b1) Messen der Drehzahl des dritten Nutrads (6);
c1) Messen des Differenzwinkels zwischen der zweiten Teilwelle (2) und der dritten Teilwelle (3);
d1) Beschleunigen der zweiten Strömungsmaschine und/oder der dritten Strömungsmaschine mit einem anhand der gemessenen Drehzahlen des zweiten Nutrads (5) und des dritten Nutrads (6) und des Differenzwinkels zwischen der zweiten Teilwelle (2) und der dritten Teilwelle (3) bestimmten Beschleunigungswert derart, dass die beiden Teilwellen (2, 3) bei einem vorherbestimmten zweiten Zielkuppelwinkel miteinander kuppeln.

9. Verfahren gemäß Anspruch 7 oder 8,
wobei in Schritt a) die zweite Teilwelle (2) und/oder in Schritt a1) die dritte Teilwelle (3) mit einer Drehzahl niedriger als ein Fünftel der Nenndrehzahl des Strömungsmaschinenstrangs (9) rotiert wird.

10. Verfahren gemäß einem der Ansprüche 7 bis 9,
wobei die Nuträder (4 bis 6) eine Mehrzahl an Nuten aufweisen, die von Flanken begrenzt sind, und zum Messen der jeweiligen Drehzahl die Flanken erfasst werden.

11. Verfahren gemäß einem der Ansprüche 7 bis 10,
wobei die Nuträder (4 bis 6) eine Mehrzahl an Nuten aufweisen, die ungleichmäßig verteilt entlang des Umfangs des Strömungsmaschinenstrangs (9) angeordnet sind, und der Differenzwinkel zwischen zwei benachbarten Teilwellen (1 bis 3) anhand der ungleichmäßig verteilten Nuten bestimmt wird.

12. Verfahren gemäß einem der Ansprüche 7 bis 11,
wobei das Verfahren beim Anfahren des Strömungsmaschinenstrangs (9) und/oder, in dem Fall, dass mindestens eine der Teilwellen (1, 2) vom Rest des Gasturbinenstrangs (9) entkuppelt ist, beim Abfahren des Gasturbinenstrangs (9) durchgeführt wird.

13. Verfahren gemäß einem der Ansprüche 7 bis 12,
wobei in Schritt d) und/oder d1) beim Beschleunigen der jeweiligen Strömungsmaschine ein neuer Differenzwinkel bestimmt wird und die jeweilige Strömungsmaschine mit einem anhand neuer gemessener Drehzahlen und des neuen Differenzwinkels bestimmten neuen Beschleunigungswert derart beschleunigt wird, dass der jeweilige Zielkuppelwinkel erreicht wird.
